# EUROPEAN PATENT APPLICATION

(11) **EP 1 559 311 A1**
(43) Date of publication of application: **03.08.2005**
(21) Application number: 05075225.2
(22) Date of filing: 28.01.2005
(51) Int. Cl.: A01G 9/14

(54) **Method and system for the cultivation of plants**

(30) Priority: 29.01.2004 NL 1025358
(71) Applicant: W/M Systems B.V., 2661 EP Bergschenhoek (NL)
(72) Inventor: De Jager, Maarten, 2587 TX Den Haag (NL); Brugman, Thomas Gerardus, 2715 AN Zoetermeer (NL)
(74) Representative: van Westenbrugge, Andries

(57) **Abstract**

Method and system for the cultivation of plants. These are arranged on the bearing surface of mobile tables in a known manner. According to the invention this bearing surface is arranged relatively close to the floor of the greenhouse or other cultivation area. As a result, on the one hand there is an adjustment facility for the rail system that supports the tables and, on the other hand, the possibility that the tables are accessible in a simple manner. Moreover, as a result it becomes possible to install a feed/removal system, which is common to a number of series of tables, at a relatively low height. This also results in a maximum greenhouse height above the plants as climate buffer and as space for transport over the plants.

## Description

The present invention relates to a method for the cultivation of plants, wherein said plants are arranged on mobile carriers, which mobile carriers are arranged in a cultivation area such as a greenhouse, wherein the bearing surface for said plants on said mobile carriers in said cultivation area are between 10 and 45 cm above the floor in said cultivation area, wherein said mobile carriers can be moved along rails.

A method of this type is disclosed in EP 0 452 217. According to this specification platforms arranged in a somewhat elevated position are moved back and forth so as in this way to create the space for a walkway or the like. This movement is possible only over a very small distance in order to create a walkway. Moreover, the supports concerned are provided with heating.

In the state of the art two systems are used for watering. A first system makes use of spraying. Nowadays a so-called ebb-and-flow system is often used, where the bottom of the plant is periodically provided with water. With this system it is important that all plants get an equal amount of water and that there is always a guarantee that the water flows away at the end of a watering period so as to prevent root rot and the like. Such an ebb-and-flow system can be used both in cultivation areas where the plant is placed directly on the concrete floor as well as in a cultivation area where use is made of mobile tables or roll troughs.

However, it has been found, in particular in the case of cultivation on a concrete floor in greenhouses or other cultivation areas, that the correct fall that is essential for an ebb-and-flow system that functions well is difficult to obtain or to maintain. In general, such a floor is poured separately from a foundation, possibly on piles, for supporting the roof and lateral boundary of the cultivation area. If the substrate on which the floor rests does not consist of a continuous layer of sand, some subsidence will always occur in the course of time. If greenhouses or other cultivation areas with long lengths are used, the fall for an ebb-and-flow system will be kept as small as possible and even in the case of slight subsidence appreciable disruption in the ebb-and-flow system will occur, with all the associated disadvantages. Advantages of cultivation close to the ground are that as a result there is a great deal of space above the top of the plant and the top boundary of the cultivation area. As a result the climate in the greenhouse is stabilised, in particular the moisture content, CO₂ and temperature at the level of the plant can thus be controlled better. Moreover, it is possible to install a transport system or other facilities in the free space between the top of the plants and the underside of the greenhouse roof.

The use of mobile tables or roll troughs has the advantage that in the event of the occurrence of such subsidence compensation can easily be provided by adjustments in the rail system on which such mobile carriers are usually placed. This does not apply in the case of cultivation on a concrete floor because adding a further concrete layer is particularly labour intensive. Moreover, additional concrete will be applied in particular in the location that has subsided the most and further subsidence will be promoted precisely because of the greater weight of the additional concrete applied.

The advantage of a cultivation area where the plants are on the ground is that these plants are particularly easily accessible. Frequently it is necessary to perform a treatment on only a single plant in a group or to collect a group of plants very quickly (order picking). In such situations a person can easily walk into the greenhouse and pick up/treat plants.

This is less easily possible in the case of mobile tables or roll troughs. Such mobile carriers are relatively large and because of the height at which these are arranged with respect to the floor surface they are difficult to access. Therefore, in practice, there will always be transfer, optionally to a treatment area located outside the cultivation area, which is undesirable when performing brief, relatively simple, treatments. In particular, if a table is at the back of a row, extensive "shunting" operations will be needed to bring the roll container concerned into the treatment area.

The aim of the present invention is to eliminate the disadvantages known from the art and to provide a method and system with which the cultivation of plants can be performed in an efficient manner, wherein the plants are easily accessible and the advantages of a system with roll containers or mobile tables are maintained.

Said aim is achieved by the features of Claim 1.

According to the invention use is still made of a mobile (plant) carrier. Such carriers can preferably still be moved along a rail system. However, in one direction the movement of the carriers over the rails is parallel to the longitudinal axis of the rails. It is possible that the rails do not extend as far as the treatment area. In this case the carriers are transferred to other movement means. However, the construction is made such that the plant carriers, and more particularly the bearing surface for the plants, is as close as possible to the floor surface of the greenhouse. Because of the presence of a rail system or other support for the mobile tables, in principle adjustability is provided, so that any subsidence of the supporting floor can be compensated for and in any event accurate adjustment can be provided, as a result of which an ebb-and-flow system can be achieved in an accurate and efficient manner. Because of the low height, it is easily possible for persons in the cultivation area to gain access to the plants in order to pick up/to treat the plants. According to a further advantageous embodiment, the mobile carrier is constructed in such a way that treatment personnel are able to walk on it. After all, the difference in height compared with the floor is so small that the treatment personnel can easily step onto the carrier concerned. The carrier is made sufficiently strong for this purpose.

Furthermore because they are placed relatively low, the treatment personnel easily gain a good overview of the plants. For example, it can be important to assess the development, quality and specific characteristics of a specific plant. The major proportion of the buffer space between the top of the plants and the underside of the roof that has been described above is also maintained, with all the associated advantages.

Using the present invention it is also possible to provide a feed/removal system for the carriers. This can be installed at a relatively low height, so that in practice this can be positioned in one of the walkways of the greenhouse. This means that there can be both treatment personnel and feed/removal of carriers in the one location.

Furthermore, it is possible to wet or to heat the concrete floor or to carry out other treatments on it which have an effect on the plants above it, or "the climate".

The invention also relates to a system for raising plants, comprising a cultivation area provided with a rail system bearing on the floor thereof and a number of carriers that can be moved along said rail system, which system has a bearing surface for said plants, wherein the height of said rail system relative to the floor of said cultivation area is adjustable and wherein said rail system and said mobile carriers are so constructed that the height (a) of said bearing surface is at most 45 cm above said floor.

According to a particular variant the feed/removal system is made up of a roller track extending perpendicularly to the direction of movement of the carriers over the supporting rail system, wherein one or more of the rollers are driven, so that movement of the mobile tables can be provided. At the location of each "take-off end" for a series of carriers there is a special facility for placing the carriers on the roller track. Such transfer means can consist of a rail system extending transversely to the roller track that is in line with the rail system supporting the carriers and the height of which is adjustable. In an uppermost position the carriers, such as mobile carriers, such as tables or roll troughs, can be taken over from the rail system that supports the carriers and in a lowermost position the rail system is free of the carriers and the carriers are supported by the roller track described above. Preferably, such a construction is made as compact as possible in the height direction because otherwise such transfer means have an adverse effect on the height of the system, as described above.

The invention will be explained in more detail below with reference to an illustrative embodiment shown in the drawing. In the drawing:
Fig. 1 shows, diagrammatically, the system according to the invention;
Fig. 2 shows, diagrammatically, the roller track and transfer means according to the invention;
Figs 3a, 3b show various possibilities for installation of the rail system such that it is adjustable; and
Fig. 4 shows the construction of part of a carrier designed as a table.

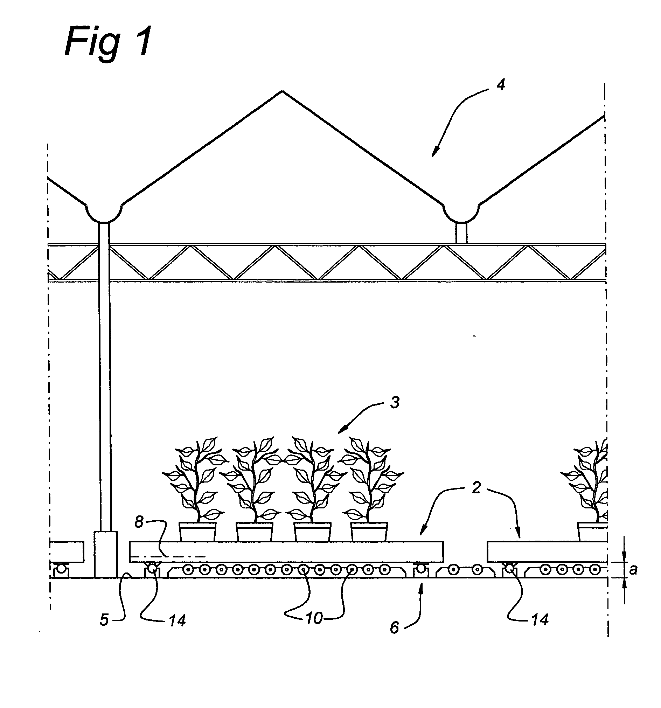

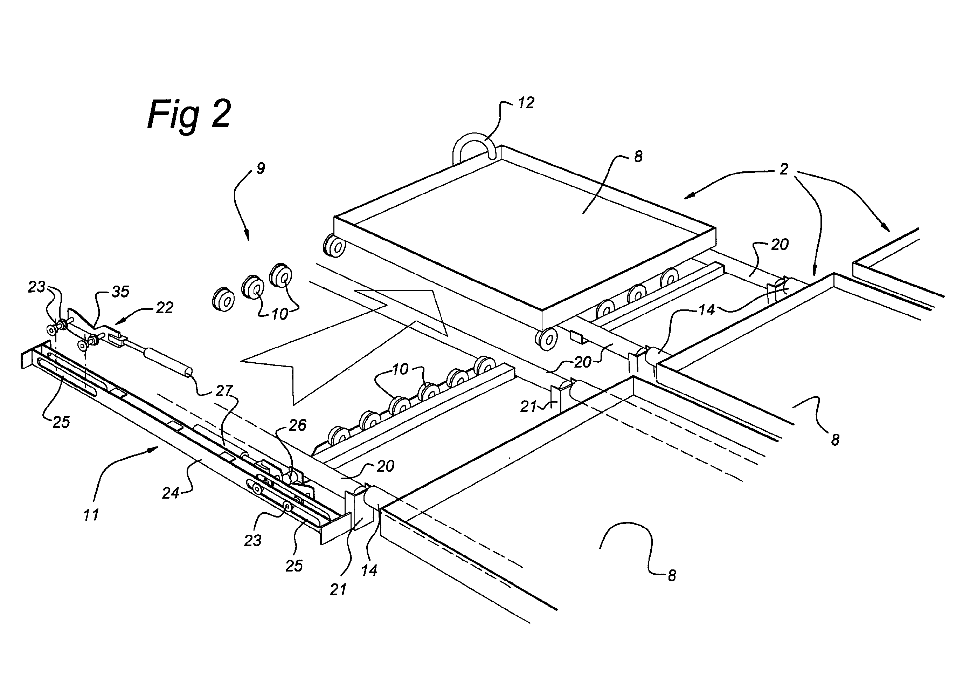

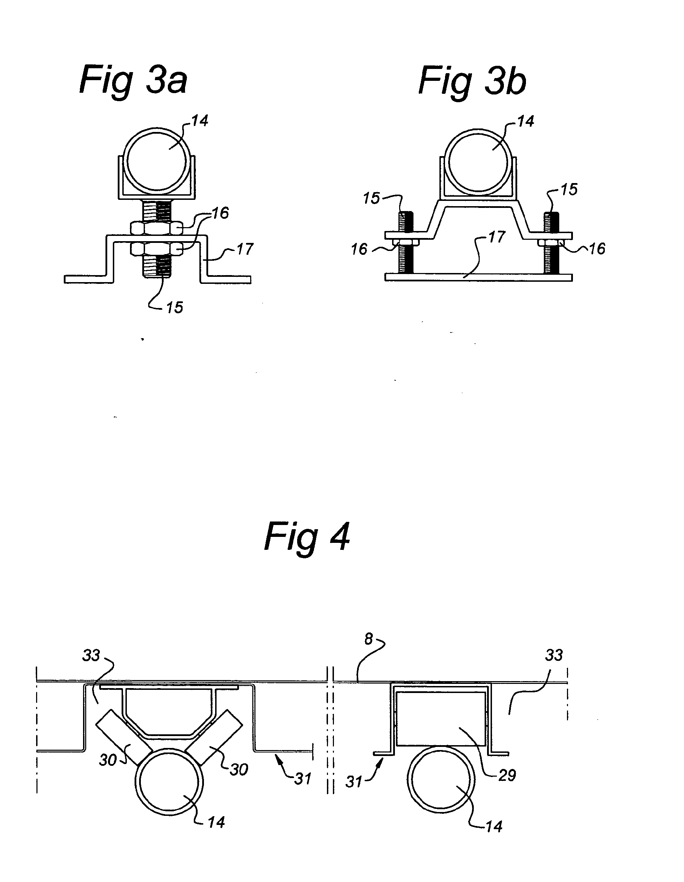

A system 1 according to the present invention is shown in Figs 1 and 2. This system consists of a large number of mobile tables 2. Pot plants 3 are placed on the bearing surface 8 thereof. In the embodiment shown here the cultivation area is a greenhouse 4, shown diagrammatically, with floor 5. This floor 5 is preferably made of a concrete material, but this is not essential for the present invention. There is a rail system 6 that is anchored to the floor in some way or other. Details of this can be seen from Figs 3a, 3b. A first variant is shown in Fig 3a, where 14 is the supporting rail on which the rollers 29 and 30 of a mobile table 2 bear (see Fig. 4). This rail is supported in a bearer provided with a support bolt 15, which is fitted with the aid of lock or bearer nuts 16 such that it is adjustable with respect to a floor bearer 17. The construction shown in Fig. 3b works in a corresponding manner. It is clear from the figures that the height of the top of rail 14 relative to the bottom of floor bearer 17 is as restricted as possible.

As a result it is possible for the bearing surface 8 of the tables 2 to be a low height above the floor 5 of the greenhouse. The distance between the bearing surface 8 and the floor 5 is indicated by a in Fig. 1 and is preferably between 10 and 45 cm and more particularly is approximately 25 cm.

It can be seen from Fig. 2 that there are a large number of series of roll containers 2. Each series moves along a rail system 6 (Fig. 1) consisting of two rails 14 located some distance apart. In the cultivation areas there can be facilities such as water supply 12 and a drain, which is not shown, in order to provide an ebb-and-flow system and further treatment of the plants 3. At the "end" of a series of mobile tables 2 there is a feed/removal system 9. Like the rail system 6, this is positioned low and can be installed in a walkway in the greenhouse. The system 9 consists of a number of rollers 10 that form a roller track. The rollers close to the transfer means are provided with a flange for enclosing the tables 2 at the side. Preferably some of the rollers 10 can be driven by a motor, so that the tables can be moved in the direction perpendicular to the direction of movement of the rail system 6.

There are transfer means 11 for transferring the mobile tables 2 from the rail system 6 to the roller track. These transfer means consist of two rails 20 that are the same distance apart as the rails 14 in a rail system 6 and are linked such that they cannot turn. Furthermore, these are in the extension of said rail system. As a result of the presence of the U sections 21, these rails 20 can be moved vertically up and down and are immovable laterally. The vertical movement is caused by moving sliders 22 in fixed guide 24, which sliders 22 are constrained in the vertical direction in slots 25 with rollers 23. Here the horizontal movement of sliders 22 is caused by cylinder 27. Slider 22 is provided with a lowered portion 35, in which there are rollers 26 that support rails 20. By moving the slider 22 with the lowered portion 35 to and fro the rollers 26 are pushed upwards to a greater or lesser extent and vertical displacement of rails 20 thus takes place by horizontal movement of the cylinders 27.

When the rails 20 are in the uppermost position, mobile tables can be moved from the rail system 6 onto rails 20. By then lowering the rails 20, the rollers 10 will support mobile table 2, that is to say the rollers 29 and 30 of mobile table 2 no longer engage on the rails 20 that have been lowered. By driving the rollers, which has been described above, the tables can then be moved to a desired location for treatment thereof.

With the present invention it is also possible, because of the low height at which the mobile tables 2 are located, for treatment personnel to step onto the mobile tables and treat/pick up one or more of the plants at that location. As a result brief treatments can be carried out in a particularly efficient manner. In order to keep the bearing surface of the mobile table as low as possible and to make the strength of the roll containers such that a working person can walk thereon without damaging the roll container, the mobile table is constructed in a particular way. This is described in more detail with reference to Fig. 4.

Part of a mobile table 2 is shown in Fig. 4. More particularly, the bearing surface 8 is indicated and the bearers 31 that extend beneath it some distance away. The bearers 31 have recesses 32 made to accommodate the fixing of rollers 29 and 30. It can be seen from the drawing that rollers 30 are pilot rollers, that is to say these are aligned accurately towards rail 14, whilst rollers 29 allow free movement transversely to the longitudinal direction of the rail. Compared with conventional constructions, the bearing surface 8 is made relatively rigid. In the case of construction from aluminium material, a plate thickness of 2 mm is mentioned as an example. There are also a larger number of members 31 compared with conventional constructions. A value of approximately 20 cm is mentioned as the distance between two adjacent members 31.

As a result of these recesses 33 the running surface of the wheels can be arranged a relatively small distance away from the underside of member 31. A value of at most 5 cm and preferably approximately 3 cm is mentioned as an example.

As a result of the adjustment facility for the rails 14 described above, the orientation of the bearing surface 8 can be determined very accurately during installation, so that, in particular, an optimum ebb-and-flow system can be provided. It must be understood that the invention is also applicable in the case of embodiments where there is no ebb-and-flow system. Should shifts in the floor 5 occur later, these can be compensated for in a simple manner by moving the lock or bearer nuts and thus the rails 6. A wide variety of constructions known in the state of the art, such as suspended carriages and the like, can be present in the cultivation area described above. Furthermore, it is possible to produce a particular climate (humidity/temperature) below the roll containers, which has a direct effect on the plants located above them. Moreover, because the plants are placed low, the cultivation area can be made lower than in the case of constructions where the roll containers are at a conventional height (70 cm and higher) above the ground.

On reading the above description, variants and applications that are obvious after the above and fall within the scope of the appended claims will be immediately apparent to those skilled in the art. For instance, it is possible, as indicated above, to use any suitable type of mobile carrier, such as a roll trough or a roll container, instead of a mobile table.

## Claims

1. Method for the cultivation of plants, wherein said plants are arranged on mobile carriers, said mobile carriers being arranged in a cultivation area such as a greenhouse, wherein the bearing surface for said plants on said mobile carriers in said cultivation area is between 10 and 45 cm above the floor in said cultivation area, wherein said mobile carriers can be moved along rails, **characterised in that** said carriers are transferred from/to said cultivation area to/from a treatment area.

2. Method according to Claim 1, comprising the individual treatment of said plants by a treatment person where said treatment person is walking on said bearing surface.

3. Method according to one of the preceding claims, wherein water with additives is alternately added to said bearing surface (ebb-and-flow system).

4. Method according to one of the preceding claims, wherein said mobile carriers can be moved along rails and the height of said rails is adjusted for correct positioning of said bearing surface.

5. Method according to one of the preceding claims, wherein said plants are pot plants.

6. System (1) for raising plants (3), comprising a cultivation area (4) provided with a rail system (6) bearing on the floor thereof and a number of carriers (2) that can be moved along said rail system, which system has a bearing surface (8) for said plants, **characterised in that** the height of said rail system relative to the floor of said cultivation area is adjustable and **in that** said rail system and said tables are so constructed that the maximum height (a) of said bearing surface is 45 cm above said floor.

7. System according to Claim 6, comprising a number of rail systems located alongside one another for taking a number of series of mobile carriers, wherein there is a common feed/removal system (9) for said series of mobile carriers perpendicular to said rail systems.

8. System according to Claim 6 or 7, wherein said feed/removal system comprises a roller track and there are transfer means (11) at the location of the end of each rail system for taking over said mobile carriers from said rail system and placing them on the roller track and vice versa.

9. System according to one of the preceding Claims 6 - 8, wherein said transfer means effect a vertical movement of said mobile carriers using an actuator that acts horizontally.

10. System according to one of Claims 6 - 9, wherein said mobile carrier comprises a roll trough.

11. System according to one of Claims 6 - 9, wherein said mobile carrier comprises a table.

12. System according to Claim 11, wherein said table has members extending beneath said bearing surface, to which members running wheels are fixed, wherein said running wheels extend at most 5 cm beyond said members.

13. System according to one of Claims 6 - 12, wherein said plant carrier is designed to carry plants and to support a treatment person without permanent deformation thereto being produced.

14. System according to one of Claims 6 - 13, wherein said system is provided with drive means for moving said mobile carriers.
